# EUROPEAN PATENT SPECIFICATION

(11) **EP 4 446 843 B1**
(45) Date of publication and mention of the grant of the patent: **20.05.2026**
(21) Application number: 22902940.0
(22) Date of filing: 16.09.2022
(51) Int. Cl.: A47L 11/40, A47L 11/24, G05D 1/243, G05D 1/246, G05D 1/639, G05D 101/20, G05D 105/10, G05D 107/40, G05D 109/10, G05D 111/10

(54) **CONTROL METHOD FOR SELF-WALKING DEVICE, SELF-WALKING DEVICE, AND STORAGE MEDIUM**
STEUERUNGSVERFAHREN FÜR EINE SELBSTGEHENDE VORRICHTUNG, SELBSTGEHENDE VORRICHTUNG UND SPEICHERMEDIUM
PROCÉDÉ DE COMMANDE POUR UN DISPOSITIF À DÉPLACEMENT AUTOMATIQUE, DISPOSITIF À DÉPLACEMENT AUTOMATIQUE ET SUPPORT DE STOCKAGE

(30) Priority: 07.12.2021 CN 202111486130
(43) Date of publication of application: 16.10.2024
(73) Proprietor: Beijing Roborock Technology Co., Ltd., Beijing 102206 (CN)
(72) Inventor: HAN, Xinyu, Beijing 102206 (CN); ZHANG, Ruimin, Beijing 102206 (CN)
(74) Representative: Studio Torta S.p.A.
(86) International application number: PCT/CN2022/119428
(87) International publication number: WO 2023/103515

(56) References cited:
- CN-A- 107 877 521
- CN-A- 108 344 414
- CN-A- 110 393 482
- CN-A- 112 155 486
- CN-A- 112 155 486
- CN-A- 112 388 639
- CN-A- 114 296 447
- DE-A1- 102018 121 365
- JP-A- 2004 249 389
- TW-A- 201 825 037
- US-A1- 2018 210 445
- US-A1- 2019 332 119

## Description

### TECHNICAL FIELD

The present disclosure relates to the field of intelligent control technologies, and in particular to a controlling method for a self-walking apparatus, the self-walking apparatus, and a storage medium.

### BACKGROUND ART

Current self-walking apparatuses, such as self-moving cleaning robots, may typically perform an obstacle avoidance operation when encountering clothes, socks, dolls, or other obstacles during a sweep operation, which has a relatively single function. Related technologies are known from patent disclosure CN112155486A.

### SUMMARY OF THE INVENTION

The invention is defined by the independent claims. In view of above, embodiments of the present disclosure provide a controlling method for a self-walking apparatus, the self-walking apparatus, and a storage medium, so as to achieve a function of categorized storage of obstacles when encountering the obstacles, thereby expanding functions of the self-travelling apparatus.

According to embodiments in a first aspect of the present disclosure, provided is a controlling method for a self-walking apparatus, the controlling method including:
recognizing category information of an obstacle on a travelling path of the self-walking apparatus; acquiring region information of a current location of the obstacle; and controlling, based on a mismatch between the category information and the region information of the current location, the self-walking apparatus to contact the obstacle and perform a push operation for pushing the obstacle into a region matching the category information.

According to embodiments in a second aspect of the present disclosure, provided is a self-walking apparatus, which includes: a perception module configured to recognize category information of an obstacle on a travelling path of the self-walking apparatus and further configured to acquire region information of a current location of the obstacle; and a control module configured to control, based on a mismatch between the category information and the region information of the current location, a driving module to drive the self-walking apparatus to contact the obstacle and perform a push operation for pushing the obstacle into a region matching the category information.

According to embodiments in a third aspect of the present disclosure, provided is a self-walking apparatus, which includes a processor and a memory, wherein the memory is configured to store operation instructions; and the processor is configured to execute, by invoking the operation instructions, the controlling method for the self-walking apparatus according to any embodiment of the first aspect.

According to embodiments in a fourth aspect of the present disclosure, provided is a computer-readable storage medium which stores a computer program therein, wherein the program, when executed by a processor, is used for implementing the controlling method for a self-walking apparatus according to any embodiment of the first aspect.

### BRIEF DESCRIPTION OF THE DRAWINGS

For clearer descriptions of the technical solutions in the embodiments of the present disclosure or the prior art, the following briefly introduces the accompanying drawings required for describing the embodiments. Apparently, the accompanying drawings in the following description show some embodiments of the present disclosure, and persons of ordinary skill in the art may still derive other drawings from these accompanying drawings without creative efforts.
FIG. 1 is a schematic structural diagram of a self-walking apparatus according to an optional embodiment of the present disclosure.
FIG. 2 is a schematic structural diagram of a perspective of the embodiment shown in FIG. 1.
FIG. 3 is a partial schematic exploded view of the embodiment shown in FIG. 1.
FIG. 4 is a schematic flowchart of a controlling method for a self-walking apparatus according to an optional embodiment of the present disclosure.
FIG. 5 is a schematic diagram of an electronic structure of a self-walking apparatus according to an optional embodiment of the present disclosure.

List of main reference numerals are as follows:
10-self-walking apparatus, 110-machine body, 111-forward portion, 112-backward portion, 120-perception module, 121-location determining device, 130-control module, 140-driving module, 141-primary driving wheel module, 142-driven wheel, 150-cleaning system, 151-dry cleaning system, 152-side brush, 153-wet cleaning system, 1531-cleaning head, 1532-driving unit, 1533-driving platform, 1534-supporting platform, 160-energy system, 170-human-computer interaction module, 601-processing device, 602-ROM, 603-RAM, 604-bus, 605-I/O interface, 606-input device, 607-output device, 608-storage device, and 609-communication device.

### DETAILED DESCRIPTION

The embodiments of the present invention are described in detail below. Examples of the embodiments are shown in the accompanying drawings, in which the same or similar reference signs indicate the same or similar elements or elements having the same or similar functions. The embodiments described below with reference to the accompanying drawings are exemplary, and are intended to explain the present application, but shall not be explained as a limitation to the present disclosure.

Embodiments of the present disclosure provide a possible application scenario that includes a self-walking apparatus 10. Specifically, the self-walking apparatus 10 includes a self-moving cleaning apparatus, such as a sweeping robot, a mopping robot, a sweeping-mopping integrated robot, a vacuum cleaner, or the like. It will be appreciated that the self-walking apparatus 10 may also be other apparatuses that fulfill the requirements. The embodiments of the present disclosure are illustrated by taking the self-walking apparatus 10 being the self-moving cleaning robot as an example. The self-walking apparatus 10 is typically controlled to travel on a predefined sweeping path using a host keypad, an APP, etc., to perform a corresponding functional operation.

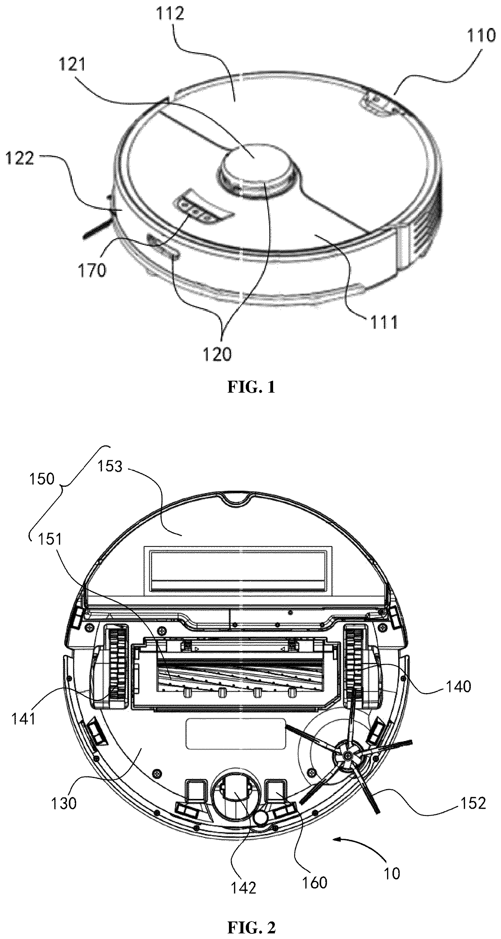

Furthermore, as shown in FIGs. 1 and 2, the self-walking apparatus 10 may include a machine body 110, a perception module 120, a control module 130, a driving module 140, a cleaning system 150, an energy system 160, and a human-computer interaction module 170.

As shown in FIG. 2, the machine body 110 includes a forward portion 111 and a backward portion 112 both having an approximately circular shape (both the front and rear portions being circular), and may also have other shapes including, but not limited to, an approximately D-shaped shape with a square front and circular rear, and a rectangular or square shape with a square front and square rear.

As shown in FIG. 1, the perception module 120 includes: a location determining device 121 provided on the machine body 110, a collision sensor and a proximity sensor provided on a buffer of the forward portion 111 of the machine body 110, a cliff sensor provided on a lower portion of the machine body 110, as well as a magnetometer, an accelerometer, a gyroscope, an odometer and other sensing devices provided inside the machine body 110 for providing various location information and motion state information of the machine to the control module 130. The location determining device 121 includes, but is not limited to, a camera and a laser distance sensor (LDS).

As shown in FIG. 1, the forward portion 111 of the machine body 110 may be provided with the buffer. During cleaning, when the driving wheel module 141 propels the self-walking apparatus 10 to travel on the ground, the buffer detects one or more events in a travelling path of the self-walking apparatus 10 via a sensor system disposed on the buffer, e.g., an infrared sensor. The self-walking apparatus 10 may control the driving module 140 based on an event (e.g., an obstacle or a wall) detected by the buffer, thereby causing the self-walking apparatus 10 to make a response to the event, e.g., perform an obstacle avoidance operation away from the obstacle.

The control module 130 is provided on a circuit motherboard within the machine body 110 and includes a computational processor (e.g., a central processing unit or an application processor) in communication with a non-transitory memory (e.g., a hard disk, a flash memory or a random access memory). The application processor draws an instant map of an environment in which the self-walking apparatus 10 is located using a localization algorithm, such as simultaneous localization and mapping (SLAM), based on obstacle information fed back by a laser ranging device. In addition, based on distance information and speed information as fed back by the sensor, the cliff sensor, the magnetometer, the accelerometer, the gyroscope, the odometer and other sensing devices provided on the buffer, a current operation state, a current location, a current pose of the self-walking apparatus 10, such as crossing a threshold, getting on a carpet, locating at an edge of a cliff, being trapped from above or below, having a full dust box or being picked up, can be comprehensively determined. In addition, specific next-step action strategies may be given for different situations, so that the self-walking apparatus 10 has a better cleaning performance and user experience.

As shown in FIG. 2, the driving module 140 may manipulate the machine body 110 to travel across the ground based on a driving command including distance and angle information, such as x, y, and θ components. The driving module 140 includes a primary driving wheel module 141, and the primary driving wheel module 141 may control a left wheel and a right wheel simultaneously. In order to control the motion of the machine more precisely, the primary driving wheel module 141 preferably includes a left driving wheel module and a right driving wheel module respectively. The left and right driving wheel modules are provided along a lateral axis defined by the machine body 110. In order for the self-walking apparatus 10 to move on the ground more stably or have a stronger movement ability, the self-walking apparatus 10 may include one or more driven wheels 142 that include but are not limited to a universal wheel. The primary driving wheel module 141 includes a travelling wheel, a driving motor, and a control circuit for controlling the driving motor. The primary driving wheel module 141 may also be connected to a circuit for measuring a driving current and the odometer. The driving wheel may have a biased drop suspension system, is fastened in a removable manner, such as being attached to the machine body 110 in a rotatable manner, and receives a spring offset biased downward and away from the machine body 110. The spring bias allows the driving wheel to maintain contact with the ground and traction with a certain landing force, and meanwhile, cleaning elements of the self-walking apparatus 10 may also contact the ground with a certain pressure.

The energy system 160 includes a rechargeable battery, such as a nickel-hydride battery and a lithium battery. The rechargeable battery may be connected with a charging control circuit, a battery pack charging temperature detecting circuit and a battery undervoltage monitoring circuit, wherein the charging control circuit, the battery pack charging temperature detecting circuit and the battery undervoltage monitoring circuit are then connected to a single-chip microcomputer control circuit. The machine is connected to a charging pile for charging through a charging electrode disposed on a side of or below the machine body.

The human-computer interaction module 170 includes buttons that are on a panel of the machine and used by a user to select functions. The human-computer interaction module 170 may further include a display screen and/or an indicator light and/or a horn that presents a current state or function item of the machine to the user. The human-computer interaction module 170 may further include a mobile client program. For a route navigation type automatic self-walking apparatus, the mobile client may present a map of an environment where the apparatus is located and a location of the robot to the user, which may provide richer and more user-friendly function items to the user.

The cleaning system 150 may be a dry cleaning system 151 and/or a wet cleaning system 153.

As shown in FIG. 2, the dry cleaning system 151 according to embodiments of the present disclosure may include a rolling brush, a dust box, a blower and an air outlet. The rolling brush having a certain interference with the ground sweeps up garbage on the ground and rolls up the garbage to the front of a dust suction inlet between the rolling brush and the dust box, and then the garbage is sucked into the dust box by air having a suction force, which is generated by the blower and passes through the dust box. The dry cleaning system 151 may further include a side brush 152 having a rotary shaft angled relative to the ground, for moving debris into a region of the rolling brush of the cleaning system 150.

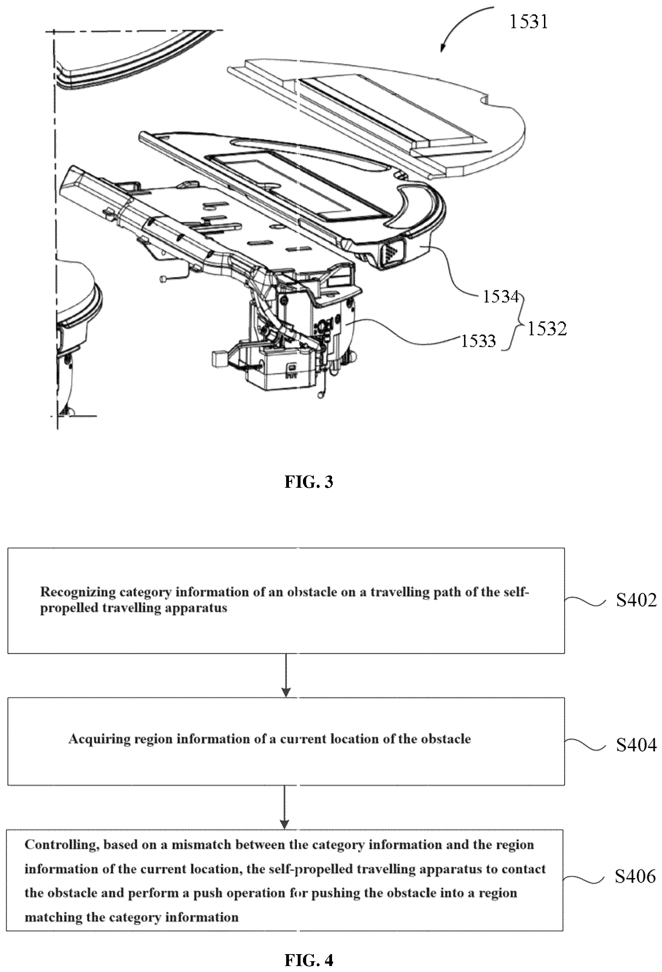

As shown in FIG. 2 and FIG. 3, the wet cleaning system 153 according to embodiments of the present disclosure may include a cleaning head 1531, a driving unit 1532, a water delivery mechanism, a liquid storage tank, etc. The cleaning head 1531 may be provided below the liquid storage tank, and a cleaning liquid inside the liquid storage tank is transferred to the cleaning head 1531 through the water delivery mechanism, thereby enabling the cleaning head 1531 to clean wetly a plane to be cleaned. In other embodiments of the present disclosure, the cleaning liquid inside the liquid storage tank may also be sprayed directly onto the plane to be cleaned, and the cleaning head 1531 achieves cleaning of the plane by applying the cleaning liquid evenly.

The cleaning head 1531 is configured to clean the surface to be cleaned, and the driving unit 1532 is configured to drive the cleaning head 1531 to substantially reciprocate along a target surface, the target surface being a portion of the surface to be cleaned. The cleaning head 1531 reciprocates along the surface to be cleaned, and a surface of the cleaning head 1531 in contact with the surface to be cleaned is provided with cleaning cloth or a cleaning plate, which generates a high-frequency friction with the surface to be cleaned through a reciprocating motion, thereby removing stains on the surface to be cleaned.

As shown in FIG. 3, the driving unit 1532 may further include a driving platform 1533 and a supporting platform 1534, wherein the driving platform 1533 is connected to a bottom surface of the machine body 110 for providing a driving force; and the supporting platform 1534 is removably connected to the driving platform 1533 for supporting the cleaning head 1531 and may ascend and descend under the driving of the driving platform 1533.

The wet cleaning system 153 may be connected to the machine body 110 through an active lifting and lowering module. The wet cleaning system 153 is lifted by the active lifting and lowering module when the wet cleaning system 153 is temporarily not involved in working, for example, when the cleaning robot docks at a base station to clean the cleaning head 1531 of the wet cleaning system 153 or to fill the liquid storage tank with water, or when the surface to be cleaned as encountered cannot be cleaned with the wet cleaning system 153.

According to one of embodiments of the present disclosure, the embodiment of the present disclosure as shown in FIG. 4 provides a controlling method for a self-walking apparatus. The controlling method includes the following steps.

In S402: category information of an obstacle on a travelling path of the self-walking apparatus is recognized.

The travelling path is indicative of that the self-walking apparatus may move along the travelling path. Specifically, the travelling path may include a predetermined sweep travelling path, a monitor travelling path, a travelling path to a pile, or other requirement-meeting travelling paths of the self-walking apparatus. That is, the self-walking apparatus, while travelling along the traveling path, may also carry out a sweep operation, a monitor operation, or other operations such as charging by reaching a charging pile at a base station along the traveling path. The category information is indicative of a category of the obstacle, and the category of the obstacle may for example include clothing, dolls, books, and the like.

When moving on the travelling path, the self-walking apparatus, by recognizing the category information of the obstacle on the travelling path, may obtain the specific category of the obstacle, which in turn helps the self-walking apparatus perform a corresponding operation according to the category of the obstacle.

Specifically, the perception module of the self-walking apparatus further includes a camera device and/or a device such as structured light to obtain volume or shape parameters of the obstacle to recognize the category information of the obstacle. For example, the obstacle may be determined as a doll, socks, a jacket, a book, etc. based on the volume or shape parameters of the obstacle. The camera device may include a time-of-flight (ToF) lens, or other lenses that meet the requirements.

In S404: region information of a current location of the obstacle is acquired.

The self-walking apparatus may travel within a rather large range that includes a plurality of regions. For example, the rather large range may be within a room, and the plurality of regions includes a checkroom, a bedroom, a children's room, a study room, and the like. It will be appreciated that the rather large range may also be other ranges that meet the requirements, such as shopping malls and supermarkets.

The current location is a location where the obstacle is located. By acquiring the region information of the current location of the obstacle, it is possible to know the region where the obstacle is currently located, which in turn helps the self-walking apparatus perform a corresponding operation according to the region information of the current location of the obstacle.

Specifically, volume or shape parameters of other objects in surroundings of the region may be acquired via the camera device and/or the device such as structured light of the perception module, so as to determine the region information of the current location. For example, if the region is sensed to include a children's bed via the camera device and/or the device such as structured light, the region may be determined as a children's room; and if the region is sensed to include a closet, a plurality of displayed clothes, etc., via the camera device and/or the device such as structured light, the region may be determined as a checkroom. Alternatively, the range in which the self-walking apparatus may travel may be divided into regions in advance, and the region in which the obstacle is currently located may be determined by comparing the current location information of the obstacle as acquired with the location information of the divided regions.

In S406: based on a mismatch between the category information and the region information of the current location, the self-walking apparatus is controlled to contact the obstacle and perform a push operation for pushing the obstacle into a region matching the category information.

When the category information of the obstacle does not match the region information of the current location, it means that the obstacle should not be placed in the region corresponding to the current location. For example, if the category information of the obstacle indicates the obstacle as clothing socks, a region matching the clothing socks should be a checkroom, whereas the region information of the current location of the obstacle indicates that the region is a study room. Accordingly, the category information of the obstacle does not match the region information of the current location, which means that the clothing socks should not be placed in the study room. Therefore, the self-walking apparatus is controlled to contact the obstacle and perform a push operation to move the obstacle into a region that matches the category information, such as pushing the clothing socks to the checkroom, thereby achieving a function of categorized storage of the obstacles, expanding the functions of the self-walking apparatus, and enhancing the user's using experience.

It will be appreciated that when the category information of the obstacle matches the region information of the current location, it means that the obstacle should be placed in the region corresponding to the current location. For example, if the category information of the obstacle indicates the obstacle as clothing socks, the region matching the clothing socks should be a checkroom, whereas the region information of the current location of the obstacle indicates that the region is the checkroom. Accordingly, the category information of the obstacle matches the region information of the current location, which means that the clothing socks should be placed in the checkroom. At this point, the self-walking apparatus may drive the obstacle to continue traveling along the current travelling path, or perform an obstacle avoidance operation before continuing to travel along the current travelling path.

Specifically, controlling the self-walking apparatus to perform the push operation may include: controlling the self-walking apparatus to move and push, during the movement of the self-walking apparatus, the obstacle into a region that matches the category information by the machine body of the self-walking apparatus coming into contact with the obstacle.

In other words, according to the controlling method for the self-walking apparatus provided by embodiments of the present disclosure, when the self-walking apparatus is traveling along the travelling path, a category of the obstacle may be determined by recognizing the category information of the obstacle on the travelling path of the self-walking apparatus. The region in which the obstacle is currently located may be determined by acquiring the region information of the current location of the obstacle; and then whether the category information of the obstacle matches the region information of the current location may be determined. If the category information of the obstacle does not match the region information of the current location, it means that the obstacle should not be placed in the region corresponding to the current location, and the obstacle is pushed to the region matching the category information by controlling the self-walking apparatus to contact the obstacle and perform a push operation, thereby achieving a function of categorized storage of the obstacle, expanding the functions of the self-walking apparatus, solving the problem that the self-walking apparatus has a single function, and enhancing the user experience. Meanwhile, the obstacle is pushed into the corresponding region, which facilitates the user to perform a sorting operations for the obstacle, and further improves the degree of satisfaction of users.

In some possible embodiments of the present disclosure, the controlling method for the self-walking apparatus further includes the following method steps.

In S408: force application information of the obstacle is acquired after contacting the obstacle.

In S410: the self-walking apparatus is controlled to perform the push operation based on the force application information being less than a predetermined threshold, otherwise the self-walking apparatus is controlled to perform the obstacle avoidance operation.

In this embodiment, the force application information of the obstacle may indicate a weight of the obstacle. That is, after contacting with the obstacle, the self-walking apparatus can know the gravity of the obstacle by acquiring the force application information of the obstacle. When the force application information is less than the predetermined threshold, it means that the weight and gravity of the obstacle are small, and the self-walking apparatus can push the obstacle. Therefore, the self-walking apparatus is then controlled to perform the push operation, such that the obstacle can be pushed into the region matching the category information reliably, accurately, and smoothly, thereby achieving a function of categorized storage of the obstacle. When the force application information is greater than or equal to the predetermined threshold, it means that the weight and gravity of the obstacle are large, and the self-walking apparatus cannot push the obstacle. If the self-walking apparatus continues pushing the obstacle, there is a possibility of damaging the self-walking apparatus, or a feasibility of wasting energy. Therefore, the self-walking apparatus is controlled to perform the obstacle avoidance operation. That is, the self-walking apparatus is controlled to avoid the obstacle and continue to move along the traveling path, which is conducive to reducing a failure rate and prolonging the service life of the self-walking apparatus, further saving energy to a greater extent and reducing the usage cost.

It will be appreciated that the step S408 may be performed after the mismatch between the category information and the region information of the current location. That is, the step S408, as one of conditions for determining whether the self-walking apparatus is controlled to perform the push operation, should be completed before the step of controlling the self-walking apparatus to perform the push operation.

The predetermined threshold may be related to a maximum thrust of the self-walking apparatus. For example, in order to ensure the reliability and smoothness of pushing of the obstacle, the predetermined threshold may be less than the maximum thrust value of the self-walking apparatus. It will be appreciated that the predetermined threshold may be also in other relationships with the maximum thrust value that satisfy the requirements, or, alternatively, the predetermined threshold may be a fixed value.

In the above embodiments, the self-walking apparatus includes a collision sensor, which may be provided on the buffer or on other locations that fulfill the requirements. Acquiring the force application information of the obstacle may include the following specific methods and steps.

In S408-1: acting force information sensed by the collision sensor while contacting with the obstacle is acquired.

In other words, when the collision sensor is in contact with the obstacle, the force application information of the obstacle can be determined by acquiring the acting force information sensed by the collision sensor. Since the self-walking apparatus, while pushing the obstacle to move forward after contacting the obstacle, will be subject to an acting force from the obstacle. The acting force is proportional to the weight of the obstacle, and the magnitude of the acting force can be detected by the collision sensor. Therefore, by acquiring the acting force information of the obstacle on the self-walking apparatus as sensed by the collision sensor, it is possible to determine weight information of the obstacle, and thus determine the force application information of the obstacle, which is convenient to detect and easy to realize and achieves accurate and reliable detection results. In addition, because the collision sensor is a part of the original perception module of the self-walking apparatus, the force application information of the obstacle can be acquired without addition of other detection devices, which simplifies the structure, and meets the design requirements of the self-walking apparatus for a compact structure and a small volume.

It will be appreciated that in other embodiments provided by the present disclosure, a detection device for the force application information of the obstacle may also be separately provided on the self-walking apparatus to detect the force application information of the obstacle.

In some possible embodiments of the present disclosure, the controlling method for the self-walking apparatus further includes the following steps.

In S412: map information is acquired, wherein the map information includes region information on at least two regions, and the region information on any one of the regions is associated with the category information on more than one type of the obstacles.

In this embodiment, the map information is indicative of a rather large range in which the self-walking apparatus may travel. The rather large range may for example be within a room, and the map information is indicative of the layout in the room. That is, when the self-walking apparatus is used for sweeping the room, the map information may be the map information corresponding to the layout of the room; and when the self-walking apparatus is used for sweeping a shopping mall, the map information may be the map information corresponding to the layout of the shopping mall. By acquiring the map information, the self-walking apparatus can be allowed to store an instant map corresponding to a rather large range of travel.

The map information includes region information on at least two regions, and the region information on any one of the regions is associated with the category information on more than one type of the obstacles. That is, the region information of each region includes the category information of the corresponding obstacle, and there may be one, two, or more types of category information of the obstacle. In other words, each region is used for storing or receiving at least one category of the obstacles, and this correspondence is stored within the self-walking apparatus. Therefore, based on the region information on at least two regions as included in the map information and the category information of at least one obstacle as associated with the region information on any one region, the self-walking apparatus can accurately determine whether the category information of any obstacle matches the region information of the current location, which in turn facilitates that the self-walking apparatus can accurately carry out a subsequent operation on the obstacle. The subsequent operation may include a push operation.

Specifically, taking the map information being the room as an example, regional division may be made to the map information according to functions, such as into a checkroom, a bedroom, a children's room, a study room, and so on. Region information of the checkroom is associated and matched with category information of obstacles including clothing, shoes and hats, region information of the children's room is matched with category information of obstacles including dolls and children's appliances, region information of the study room is matched with category information of the obstacles including books and stationery, and so on. The number of regions may be two, three, four, or other numbers that meet the requirements.

It will be appreciated that the region information on the same region may be associated with category information of more than one type of obstacles. For example, the same region information may be associated with category information of two types of obstacles. For example, the region information of the children's room may be matched with category information of the obstacles including dolls and children's utensils, and the region information of the children's room may meanwhile be matched with the category information of books. Also, books may be associated with the region information of the study room. That is, when one of the doll, the children's utensil and the book is in a region of the children's room, the self-walking apparatus may not perform the push operation. The self-walking apparatus may perform the push operation when the doll or the children's utensil is in the region of the study room, and may not perform the push operation when the book is in the region of the study room.

It will be appreciated that for the same obstacle, its category information may be associated with different types of region information or may be associated with one type of region information. For example, for the books, the category information of the books may be associated with the region information of the study room, or may be associated with the region information of the bedroom. When a book is in a region of the study room or the bedroom, the self-walking apparatus may not perform the push operation; and when the book is in one of the regions of a living room or a kitchen, the self-walking apparatus may perform the push operation to move the book to one of the regions of the bedroom and the study room based on a proximity principle. The category information of the doll may be associated with the children's room. The self-walking apparatus may not perform the push operation when the doll is in a region of the children's room, and may perform the push operation when the doll is in a region of the living room or the kitchen. It will be appreciated that the step S412 may be completed before the step S404, so as to acquire the region information of the current location of the obstacle in the step S404.

In some possible embodiments provided by the present disclosure, the region information on any region is associated with the category information of the obstacle, which specifically includes:
any of the regions corresponds to a label, and each label corresponds to a prior data set, wherein the prior data set in the same label corresponds to the same type of obstacles.

The label of the region is the region information of the region. Specifically, the label of the region may be attribute information of the region. For example, the label may be a children's room, a study room, a living room, and so on. A plurality of pieces of prior data is stored in a database, and the prior data may be categorized according to the label of the region to form a prior data set. That is, the label of each region corresponds to one prior data set. Specifically, the prior data corresponds to the attribute information of the obstacles. That is, each piece of the prior data corresponds to a different obstacle, such that the prior data set in the same label may correspond to more than one type of obstacles, thereby enabling the region information of the region to be associated with the category information of the obstacles. Associating the region information of the region with the category information of the obstacles in this way does not require manual operations and is conducive to improving the intelligence of the self-walking apparatus.

It will be appreciated that if the attribute information of an obstacle is acquired to match a piece of certain prior data, it is determined that the obstacle matches the prior data set in which the prior data is located. That is, the category information of the obstacle matches a label of a region corresponding to the prior data set. The reverse situation still applies for the same reason and will not be repeated.

In other possible embodiments provided by the present disclosure, the region information of any region is associated with category information of more than one type of obstacles, which specifically includes:
establishing a correspondence between the region information and an attribute of the obstacle based on a received command to add attribute information of the obstacle with respect to any region information in the map information.

The attribute information of the obstacle is indicative of the type of the obstacle. For example, the attribute information of the obstacle may be book or pen, and its corresponding type may be a stationery type. A correspondence between a region and an attribute of an obstacle, such as a correspondence between a study room and an attribute of book or pen, may be established in a case of receiving a command to add attribute information of the obstacle with respect to any region information in the map information, e.g., a case where the user adds the attribute information of the obstacle in any region information in the map information or specifically a case where the user manually adds into the map information the attribute of the obstacle such as the book and the pen in the study room via an human-computer interaction module. Based on the same concept, it is possible to establish an attribute correspondence between the study room and other obstacles, such as an attribute correspondence between the study room and toys, etc. Thus, the study room region may correspond to more than one type of obstacles such as books, pens, and toys. That is, the attribute information in the same region information may correspond to more than one type of obstacles, which in turn can implement the association between the region information of the region and the category information of the obstacles. By associating the region information of the region with the category information of the obstacle in this way, the obstacle data can be enriched, and an application scope of the present method can be expanded.

In some possible embodiments provided by the present disclosure, the self-walking apparatus includes a sensing device. The sensing device includes, but is not limited to, a location determining device, a proximity sensor, a cliff sensor, a magnetometer, an accelerometer, a gyroscope, an odometer and other sensing devices, wherein the location determining device includes, but is not limited to, a camera, a laser distance sensor (LDS), and the like.

Acquiring the map information includes following method steps.

In S412-1: the map information is acquired based on sensing information acquired by the perception module.

In this embodiment, the map information may be acquired based on the sensing information acquired by the perception module, and an instant map may for example be drawn by the self-walking apparatus via the LDS or other means, which can accurately, quickly, and conveniently acquire the map information. In other words, the instant map information can be drawn and stored conveniently to obtain accurate and reliable drawing results. In addition, since the LDS or other sensing devices serve as part of the original perception module of the self-walking apparatus, there is no need to add other sensing devices to realize the acquisition of map information and, namely, complete the drawing of the instant map, which simplifies the structure and meets the design requirements of the self-walking apparatus for a compact structure and a small volume. Moreover, this method does not require manual intervention, which improves the intelligence of the operation of the self-walking apparatus.

It will be appreciated that in other embodiments provided by the present disclosure, an acquisition device for the map information may also be separately provided on the self-walking apparatus to acquire the map information.

In the above embodiments, dividing the map information into at least two regions may include the following method steps.

In S414-1: the map information is divided into at least two regions based on division information acquired by the perception module.

That is, the map information can be divided into at least two regions according to the division information acquired by the perception module. For example, the self-walking apparatus can reliably, quickly and accurately divide the map information into at least two regions based on the image information acquired from a camera and in combination with a visual recognition method. Also, since the camera device serves as part of the original perception module of the self-walking apparatus, there is no need to add other sensing devices to realize the acquisition of division information for dividing the map information into at least two regions, which simplifies the structure and meets the design requirements of the self-walking apparatus for a compact structure and a small volume. Moreover, this method does not require manual intervention, which improves the intelligence of the operation of the self-walking apparatus.

It will be appreciated that in other embodiments provided by the present disclosure, an acquisition device for the division information may also be separately provided on the self-walking apparatus to acquire the division information for dividing the map information into at least two regions.

In some possible embodiments provided by embodiments of the present disclosure, the self-walking apparatus includes a human-computer interaction module. The human-computer interaction module may include an input device. Specifically, the input device may be an input screen, or an input interface of an external apparatus, wherein the input screen is connected to a control system of the self-walking apparatus, and relevant information may be inputted via the input screen to realize control or other operations of the self-walking apparatus. The external apparatus may be a cellular phone, a computer, or other electronic apparatus. The external apparatus can be in communicated connection with the self-walking apparatus via the input interface, such that control or other operations of the self-walking apparatus can be realized via the external apparatus.

Acquiring the map information includes the following method steps.

In S412-2: the map information is acquired based on the input information acquired by the input device.

In this embodiment, the map information is acquired based on the input information acquired by the input device. For example, the user imports the map information via the input screen, such that the self-walking apparatus may acquire the map information based on the input information acquired by the input screen. Alternatively, the user's cellular phone is in communicated connection with the self-walking apparatus via the input interface, and the user sets map information on the cellular phone, such that the self-walking apparatus may acquire the map information by acquiring the map information set in the cellular phone. In this way, the user can flexibly set the map information. That is, the map information can satisfy the user's demands for different travelling ranges of the self-walking apparatus, which expands a use function of the self-walking apparatus and enhances the user's use experience.

In the above embodiments, dividing the map information into at least two regions may include the following method steps.

In S414-2: the map information is divided into at least two regions based on the division information acquired by the input device.

That is, the map information can be divided into at least two regions through the division information acquired by the input device. For example, the user may divide the map information via the input screen, and the self-walking apparatus, after acquiring the division information inputted by the input screen, may correspondingly divide the stored map information into at least two regions. Alternatively, the user's cellular phone is in communicated connection with the self-walking apparatus via the input interface, and the user divides the map information on the cellular phone. Then, the self-walking apparatus may correspondingly divide the stored map information into at least two regions by acquiring the division information set in the cellular phone. In this way, the user can flexibly input the division information. That is, the division information can meet the user's demands for different regional division of map information, which expands a use function of the self-walking apparatus and enhances the user's use experience.

In some possible embodiments provided by embodiments of the present disclosure, the travelling path includes a predetermined sweep travelling path. That is, the self-propelled traveling apparatus performs a sweep operation while travelling along the predetermined sweeping path. After the step S406, the controlling method further includes a step S416 or a step S418.

In S416: the self-walking apparatus is controlled to return to a current location and to continue a sweep operation along the predetermined sweep travelling path.

In this embodiment, the self-walking apparatus is controlled to return to the current location after controlling the self-walking apparatus to perform the push operation for pushing the obstacle into the region matching the category information, i.e., after the obstacle is successfully subjected to classified storage. The current location is a location of the obstacle before the push operation is performed, i.e., a location where the obstacle before being pushed is located in a region that does not match its corresponding category information. That is, the self-walking apparatus is controlled to return to a location before the push operation is performed. Then, the self-walking apparatus is controlled to continue to move along the predetermined sweep travelling path to perform the sweep operation, such that the subsequent sweep operation can be connected to the sweep operation before the push operation. Thus, the completeness and accuracy of the execution of the sweep operation can be ensured, which is conducive to guaranteeing a good sweeping effect, and to improving the degree of satisfaction of users.

It will be appreciated that the sweep operation is not performed when the self-walking apparatus is moving from a region matching the category information of the obstacle to a current location of a region not matching the category information of the obstacle. That is, in this embodiment, an execution order of the sweep operation is implemented in accordance with the predetermined sweep travelling path.

In S418: whether the region in which the self-walking apparatus is currently located has been swept is determined; if yes, the self-walking apparatus is controlled to move to an adjacent unswept region for restarting the sweep operation, otherwise the self-walking apparatus is controlled to start the sweep operation.

In this embodiment, whether the region in which the self-walking apparatus is currently located has been swept or not is determined after the self-walking apparatus is controlled to perform a push operation for pushing the obstacle into a region matching the category information, i.e., after the obstacle is successfully subjected to categorized storage. That is, whether the region matching the category information of the obstacle has been swept or not is determined. If the region matching the category information of the obstacle has been swept, it means that the region has been swept, and the self-walking apparatus is controlled to move to an adjacent unswept region and restart the sweep operation. That is, the self-walking apparatus is controlled to move to an unswept region adjacent to the swept region, and restart the sweep operation. In this way, the self-walking apparatus can perform the sweep operation in close proximity, which shortens a distance by which the self-walking apparatus merely moves without performing the sweeping operation, thereby improving the sweeping efficiency and saving energy.

In the case of determining that the region in which the self-walking apparatus is currently located has not been swept, it means that sweeping of the region is not completed. Then, the self-walking apparatus is controlled to start the sweep operation to sweep the region, so as to achieve the sweep operation in close proximity, which further shortens a distance by which the self-walking apparatus merely moves without performing the sweeping operation, thereby greatly improving the sweeping efficiency and saving energy.

According to embodiments in a second aspect of the present disclosure, provided is a self-walking apparatus. The self-walking apparatus includes: a perception module 120, configured to recognize category information of an obstacle on a travelling path of the self-walking apparatus and further configured to acquire region information of a current location of the obstacle; and a control module 130, configured to control, based on a mismatch between the category information and the region information of the current location, a driving module 140 to drive the self-walking apparatus to contact the obstacle and perform a push operation for pushing the obstacle into a region matching the category information.

According to the self-walking apparatus provided by the embodiments of the present disclosure, when the self-walking apparatus moves along a travelling path, the perception module 120 recognizes the category information of the obstacle on the travelling path of the self-walking apparatus to determine a category of the obstacle, and further acquires region information of a current location of the obstacle to determine the region in which the obstacle is currently located. Then the control module 130 determines whether the category information of the obstacle matches the region information of the current location. If the category information of the obstacle does not match the region information of the current location, it means that the obstacle should not be placed in the region corresponding to the current location, and the driving module 140 then controls the self-walking apparatus to contact the obstacle and perform a push operation for pushing the obstacle to the region matching the category information, thereby achieving a function of categorized storage of the obstacles, expanding the functions of the self-walking apparatus, solving the problem that the self-walking apparatus has a single function, and enhancing the user experience. Meanwhile, the obstacles are pushed into the corresponding region, which facilitates the user to perform a sorting operation of the obstacles, and further improves the degree of satisfaction of users.

It will be appreciated that the control module 130 may actuate the driving module 140 to drive the self-walking apparatus 10 to contact the obstacle and perform the push operation, or the control module 130 may actuate the driving module 140 to drive the self-walking apparatus 10 to perform an obstacle avoidance operation.

As an example, the perception module 120 is further configured to acquire force application information of the obstacle after contacting the obstacle, and the control module is further configured to control the self-walking apparatus to perform the push operation based on the force application information being less than a predetermined threshold, otherwise control the self-walking apparatus to perform the obstacle avoidance operation.

As an example, the perception module 120 includes a collision sensor, and the control module 130 is further configured to acquire acting force information sensed by the collision sensor while contacting with the obstacle.

As an example, the perception module 120 is further configured to construct map information, wherein the map information includes region information on at least two regions, and the region information on any of the regions is associated with the category information of more than one type of the obstacles.

As an example, the self-walking apparatus further includes a human-computer interaction module 170, configured to provide an interface for a user to add attribute information of the obstacle with respect to any region information in the map information.

As an example, the travelling path includes a predetermined sweep travelling path, and the control module 130 is further configured to:
control the driving module 140 to drive the self-walking apparatus to return to the current location and to continue a sweep operation along the predetermined sweep travelling path; or
determine whether the region in which the self-walking apparatus is currently located has been swept; if yes, control the driving module 140 to drive the self-walking apparatus to move to an adjacent unswept region for restarting the sweep operation, otherwise control the self-walking apparatus to start the sweep operation.

Embodiments of the present disclosure provides a self-walking apparatus including a processor and a memory. The memory stores computer program instructions executable by the processor. When the processor executes the computer program instructions, the steps of the control methods for the self-walking apparatus according to any one of the embodiments can be realized.

As shown inFIG. 5, the self-walking apparatus may include a processing apparatus (such as a central processing unit, a graphics processing unit, or the like) 601 that may perform various appropriate actions and processing according to a program stored in a read-only memory (ROM) 602 or a program loaded from a storage device 608 into a random-access memory (RAM) 603. In the RAM 603, various programs and data required for operation of the self-walking apparatus are further stored. The processing device 601, the ROM 602, and the RAM 603 are connected to each other by using a bus 604. An input/output (I/O) interface 605 is also connected to the bus 604.

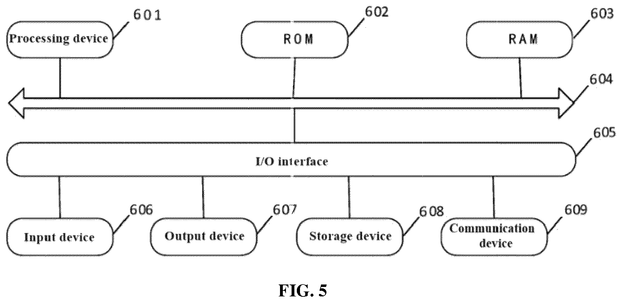

Generally, the following apparatuses may be connected to the I/O interface 605: input apparatuses 506 including, for example, a touchscreen, a touchpad, a keyboard, a mouse, a camera, a microphone, and a sensing device; output devices 607 including, for example, a liquid crystal display (LCD), a loudspeaker and a vibrator; storage devices 608 including, for example, a hard disk; and a communication device 609. The communication device 609 may allow the cleaning device to communicate wirelessly or wiredly with another device to exchange data. For example, the communication device 609 can implement communication between the cleaning device and a base station or a remote mobile device. Although FIG. 5 shows a self-walking apparatus with various apparatuses, it should be understood that it is not required to implement or provide all shown apparatuses. Alternatively, more or fewer apparatuses may be implemented or provided.

In particular, according to the embodiments of the present disclosure, the process described above with reference to the flowchart may be implemented as a robot software program. For example, an embodiment of the present disclosure includes a robot software program product that includes a computer program carried on a readable medium, and the computer program includes program codes used to perform the method shown in the flowchart of FIG. 4. In such an embodiment, the computer program may be downloaded and installed from a network by using the communication device 609, installed from the storage device 608, or installed from the ROM 602. When the computer program is executed by the processing device 601, the foregoing functions defined in the method according to the embodiments of the present disclosure are executed.

It should be noted that the foregoing computer-readable medium in the present disclosure may be a computer-readable signal medium, a computer-readable storage medium, or any combination thereof. The computer-readable storage medium may be, for example, an electrical, magnetic, optical, electromagnetic, infrared, or semiconductor system, apparatus, or device, or any combination thereof, but not limited thereto. More specific examples of the computer-readable storage medium may include but are not limited to: an electrical connection having one or more conducting wires, a portable computer disk, a hard disk, a random-access memory (RAM 603), a read-only memory (ROM 602), an erasable programmable read-only memory (EPROM 602 or flash memory), an optical fiber, a portable compact disk read-only memory (CD-ROM 602), an optical storage device, a magnetic storage device, or any suitable combination thereof.

In the present disclosure, the computer-readable storage medium may be any tangible medium that includes or stores a program, and the program may be used by or in combination with an instruction execution system, apparatus, or device. In the present disclosure, the computer-readable signal medium may include a data signal propagated in a baseband or as a part of a carrier, which carries computer-readable program codes. Such a propagated data signal may be in multiple forms, including but not limited to an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or device. The program code included in the computer-readable medium may be transmitted by using any suitable medium, including but not limited to: a wire, an optical cable, a radio frequency (RF), or any suitable combination thereof.

The computer readable medium may be included in the foregoing self-walking apparatus, or may exist separately and not be assembled into the self-walking apparatus.

Computer program codes for performing the operations of the present disclosure may be written in one or more programming languages or a combination thereof, such as object-oriented programming languages including Java, Smalltalk, C++, and conventional procedural programming languages such as "C" or similar program design languages. The program codes may be executed completely on a user computer, partially on a user computer, as an independent package, partially on a user computer and partially on a remote computer, or completely on a remote computer or server.

In cases involving a remote computer, the remote computer may be connected to a user computer through any type of network, including a local area network (LAN) or a wide area network (WAN), or may be connected to an external computer (for example, through the Internet by using an Internet service provider).

Flowcharts and block diagrams in the accompanying drawings illustrate possible architectures, functions, and operations of systems, methods, and computer program products according to various embodiments of the present disclosure. In this regard, each block in a flowchart or block diagram may represent a module, program segment, or part of code that includes one or more executable instructions for implementing a specified logical function. It should also be noted that in some alternative implementations, functions marked in the block may also occur in different order than those marked in the accompanying drawings. For example, two blocks represented in succession may actually be executed in substantially parallel, and they may sometimes be executed in a reverse order, depending on the functions involved. It should also be noted that each block in the block diagram and/or flowchart and a combination of blocks in the block diagram and/or flowchart may be implemented by using a dedicated hardware-based system that performs a specified function or operation, or may be implemented by using a combination of dedicated hardware and a computer instruction.

The device embodiments described above are merely illustrative. The units described as separate components may or may not be physically separate, and the components displayed as units may or may not be physical units, i.e., may be located at one place, or may be distributed to multiple network modules. Some or all of the modules may be selected according to actual needs to achieve the purpose of the embodiment solutions, which can be understood and implemented by those of ordinary skill in the art without any creative effort.

At last, it shall be noted that the above embodiments are only used to illustrate, instead of limiting, the technical solutions of the present disclosure. Although the present disclosure is described in detail with reference to the foregoing embodiments, those of ordinary skill in the art shall understand that they can still modify the technical solutions described in the foregoing embodiments, or make equivalent substitutions for some of the technical features; and these modifications or substitutions do not deviate the nature of the corresponding technical solutions from the scope of the technical solutions of the embodiments of the present disclosure.

## Claims

1. A controlling method for a self-walking apparatus, comprising:
recognizing (S402) category information of an obstacle on a travelling path of the self-walking apparatus;
acquiring (S404) region information of a current location of the obstacle;
controlling (S406), in response to a mismatch between the category information and the region information, the self-walking apparatus to contact the obstacle and perform a push operation for pushing the obstacle into a region matching the category information; and
acquiring map information, wherein
the map information comprises region information on at least two regions, and the region information on any of the regions is associated with the category information of more than one type of obstacles;
wherein any of the regions corresponds to a label, and each label corresponds to a prior data set, wherein the prior data set in a same label corresponds to a same type of obstacles.

2. The controlling method according to claim 1, further comprising:
acquiring an reaction force of the obstacle in response to contacting the obstacle;
controlling the self-walking apparatus to perform the push operation in response to the reaction force being less than a predetermined threshold; and
controlling the self-walking apparatus to perform an obstacle avoidance operation in response to the reaction force being greater than or equal to the predetermined threshold.

3. The controlling method according to claim 2, wherein the self-walking apparatus comprises a collision sensor, and the acquiring the reaction force of the obstacle comprises:
acquiring the reaction force sensed by the collision sensor.

4. The controlling method according to claim 1, further comprising:
establishing a correspondence between the region and an attribute of the obstacle in response to receiving command to add attribute information of the obstacle with respect to any region information in the map information.

5. The controlling method according to any one of claims 1 to 4, wherein the travelling path comprises a predetermined sweep travelling path, and after controlling the self-walking apparatus to contact the obstacle and perform the push operation for pushing the obstacle into the region matching the category information, the controlling method further comprises:
controlling the self-walking apparatus to return to the current location and to continue a sweep operation along the predetermined sweep travelling path; or
determining whether a sweep operation of a region corresponding to the current location is completed; controlling, in response to the sweep operation being completed, the self-walking apparatus to move to an adjacent unswept region for restarting another sweep operation; and controlling, in response to the sweep operation being not completed, the self-walking apparatus to start the sweep operation.

6. A self-walking apparatus, comprising:
a perception module, configured to recognize category information of an obstacle on a travelling path of the self-walking apparatus, and further configured to acquire region information of a current location of the obstacle; and
a control module, configured to control, in response to a mismatch between the category information and the region information, a driving module to drive the self-walking apparatus to contact the obstacle and perform a push operation for pushing the obstacle into a region matching the category information;
wherein
the perception module is further configured to construct map information, wherein
the map information comprises region information on at least two regions, and the region information on any of the regions is associated with the category information of more than one type of obstacles;
wherein any of the regions corresponds to a label, and each label corresponds to a prior data set, wherein the prior data set in a same label corresponds to a same type of obstacles.

7. The self-walking apparatus according to claim 6, wherein
the perception module is further configured to acquire f an reaction force of the obstacle in response to contacting the obstacle; and
the control module is further configured to control the self-walking apparatus to perform the push operation in response to the reaction force being less than a predetermined threshold, and control the self-walking apparatus to perform an obstacle avoidance operation in response to the reaction force being greater than or equal to the predetermined threshold.

8. The self-walking apparatus according to claim 7, wherein
the perception module comprises a collision sensor; and
the control module is further configured to acquire the reaction force sensed by the collision sensor.

9. The self-walking apparatus according to claim 6, further comprising:
a human-computer interaction module, configured to provide an interface for a user to add attribute information of the obstacle with respect to any region information in the map information.

10. The self-walking apparatus according to any one of claims 6 to 9, wherein the travelling path comprises a predetermined sweep travelling path, and the control module is further configured to:
control the driving module to drive the self-walking apparatus to return to the current location and to continue a sweep operation along the predetermined sweep travelling path; or
determine whether a sweep operation of a region corresponding to the current location is completed; control, in response to the sweep operation being completed, the driving module to drive the self-walking apparatus to move to an adjacent unswept region for restarting another sweep operation; and control, in response to the sweep operation being not completed, the self-walking apparatus to start the sweep operation.

11. A computer-readable storage medium, configured to store a computer program therein, wherein the computer program, when executed by a processor, is used for implementing the controlling method for the self-walking apparatus according to any one of claims 1 to 5.

## Patentansprüche

1. Steuerungsverfahren für eine selbstbewegliche Vorrichtung, umfassend:
Erkennen (S402) von Kategorieinformationen eines Hindernisses auf einem Bewegungsweg der selbstbeweglichen Vorrichtung;
Erfassen (S404) von Bereichsinformationen eines aktuellen Standorts des Hindernisses;
Steuern (S406) der selbstbeweglichen Vorrichtung als Reaktion auf eine fehlende Übereinstimmung zwischen den Kategorieinformationen und den Bereichsinformationen, um das Hindernis zu berühren und einen Schiebevorgang durchzuführen, um das Hindernis in einen Bereich zu schieben, der mit den Kategorieinformationen übereinstimmt, und
Erfassen von Karteninformationen, wobei
die Karteninformationen Bereichsinformationen über mindestens zwei Bereiche umfassen und die Bereichsinformationen über einen der Bereiche mit den Kategorieinformationen von mehr als einer Art von Hindernissen assoziiert sind,
wobei jeder Bereich einem Kennzeichen entspricht und jedes Kennzeichen einem Vordatensatz entspricht, wobei der Vordatensatz im selben Kennzeichen derselben Art von Hindernissen entspricht,

2. Steuerungsverfahren nach Anspruch 1, ferner umfassend:
Erfassen einer Reaktionskraft des Hindernisses als Reaktion auf den Kontakt mit dem Hindernis;
Steuern der selbstbeweglichen Vorrichtung, um als Reaktion darauf, dass die Reaktionskraft geringer ist als ein vorbestimmter Schwellenwert, einen Schiebevorgang durchzuführen, und
Steuern der selbstbeweglichen Vorrichtung, um als Reaktion darauf, dass die Reaktionskraft größer oder gleich dem vorbestimmten Schwellenwert ist, einen Hindernisvermeidungsvorgang durchzuführen,

3. Steuerungsverfahren nach Anspruch 2, wobei die selbstbewegliche Vorrichtung einen Kollisionssensor umfasst und das Erfassen der Reaktionskraft des Hindernisses Folgendes umfasst:
Erfassen der vom Kollisionssensor gemessenen Reaktionskraft.

4. Steuerungsverfahren nach Anspruch 1, ferner umfassend:
Herstellen einer Übereinstimmung zwischen dem Bereich und einem Attribut des Hindernisses als Reaktion auf das Empfangen eines Befehls zum Hinzufügen von Attributinformationen des Hindernisses in Bezug auf Bereichsinformationen in den Karteninformationen.

5. Steuerungsverfahren nach einem der Ansprüche 1 bis 4, wobei der Bewegungsweg einen vorbestimmten Abtastbewegungsweg umfasst und das Steuerungsverfahren nach dem Steuern der selbstbeweglichen Vorrichtung, um das Hindernis zu berühren und den Schiebevorgang durchzuführen, um das Hindernis in den mit den Kategorieinformationen übereinstimmenden Bereich zu schieben, ferner Folgendes umfasst:
Steuern der selbstbeweglichen Vorrichtung, um zu dem aktuellen Standort zurückzukehren und entlang des vorbestimmten Abtastbewegungswegs einen Abtastvorgang fortzusetzen, oder
Bestimmen, ob ein Abtastvorgang eines dem aktuellen Standort entsprechenden Bereichs abgeschlossen ist; Steuern der selbstbeweglichen Vorrichtung als Reaktion darauf, dass der Abtastvorgang abgeschlossen ist, sodass sich diese in einen benachbarten, nicht abgetasteten Bereich bewegt, um einen weiteren Abtastvorgang neu zu starten, und Steuern der selbstbeweglichen Vorrichtung als Reaktion darauf, dass der Abtastvorgang nicht abgeschlossen ist, sodass der Abtastvorgang gestartet wird.

6. Selbstbewegliche Vorrichtung, umfassend:
ein Wahrnehmungsmodul, das ausgelegt ist, um Kategorieinformationen eines Hindernisses auf einem Bewegungsweg der selbstbeweglichen Vorrichtung zu erkennen, und das ferner ausgelegt ist, um Bereichsinformationen eines aktuellen Standort des Hindernisses zu erfassen, und
ein Steuermodul, das ausgelegt ist, um als Reaktion auf eine fehlende Übereinstimmung zwischen den Kategorieinformationen und den Bereichsinformationen ein Antriebsmodul so zu steuern, dass die selbstbewegliche Vorrichtung das Hindernis berührt und einen Schiebevorgang durchführt, um das Hindernis in einen Bereich zu schieben, der mit den Kategorieinformationen übereinstimmt,
wobei
das Wahrnehmungsmodul ferner ausgelegt ist, um Karteninformationen zu erstellen, wobei
die Karteninformationen Bereichsinformationen über mindestens zwei Bereiche umfassen und die Bereichsinformationen über einen der Bereiche mit den Kategorieinformationen von mehr als einer Art von Hindernissen assoziiert sind,
wobei jeder Bereich einem Kennzeichen entspricht und jedes Kennzeichen einem Vordatensatz entspricht, wobei der Vordatensatz im selben Kennzeichen derselben Art von Hindernissen entspricht,

7. Selbstbewegliche Vorrichtung nach Anspruch 6, wobei
das Wahrnehmungsmodul ferner ausgelegt ist, um als Reaktion auf das Berühren des Hindernisses eine Reaktionskraft des Hindernisses zu erfassen f, und
das Steuermodul ferner ausgelegt ist, um die selbstbewegliche Vorrichtung so zu steuern, dass sie als Reaktion darauf, dass die Reaktionskraft geringer ist als ein vorbestimmter Schwellenwert, den Schiebevorgang durchführt, und die selbstbewegliche Vorrichtung so zu steuern, dass diese als Reaktion darauf, dass die Reaktionskraft größer oder gleich dem vorbestimmten Schwellenwert ist, einen Hindernisvermeidungsvorgang durchführt.

8. Selbstbewegliche Vorrichtung nach Anspruch 7, wobei
das Wahrnehmungsmodul einen Kollisionssensor umfasst und
das Steuermodul ferner ausgelegt ist, um die von dem Kollisionssensor gemessene Reaktionskraft zu erfassen.

9. Selbstbewegliche Vorrichtung nach Anspruch 6, ferner umfassend:
ein Mensch-Computer-Interaktionsmodul, das ausgelegt ist, um eine Schnittstelle für einen Nutzer bereitzustellen, um Attributinformationen des Hindernisses in Bezug auf Bereichsinformationen in den Karteninformationen hinzuzufügen.

10. Selbstbewegliche Vorrichtung nach einem der Ansprüche 6 bis 9, wobei der Bewegungsweg einen vorbestimmten Abtastbewegungsweg umfasst und das Steuermodul ferner ausgelegt ist, um
das Antriebsmodul so zu steuern, dass die selbstbewegliche Vorrichtung an den aktuellen Standort zurückkehrt und einen Abtastvorgang entlang des vorbestimmten Abtastbewegungswegs fortsetzt, oder
zu bestimmen, ob ein Abtastvorgang eines dem aktuellen Standort entsprechenden Bereichs abgeschlossen ist; die selbstbewegliche Vorrichtung als Reaktion darauf, dass der Abtastvorgang abgeschlossen ist, so zu steuern, dass sich diese in einen benachbarten, nicht abgetasteten Bereich bewegt, um einen weiteren Abtastvorgang neu zu starten, und die selbstbewegliche Vorrichtung als Reaktion darauf, dass der Abtastvorgang nicht abgeschlossen ist, so zu steuern, dass der Abtastvorgang gestartet wird.

11. Computerlesbares Speichermedium, das ausgelegt ist, um darin ein Computerprogramm zu speichern, wobei das Computerprogramm, wenn es von einem Prozessor ausgeführt wird, genutzt wird, um das Steuerungsverfahren für die selbstbewegliche Vorrichtung nach einem der Ansprüche 1 bis 5 umzusetzen.

## Revendications

1. Procédé de commande d'un appareil à déplacement automatique, comprenant :
la reconnaissance (S402) d'informations de catégorie d'un obstacle sur un trajet de déplacement de l'appareil à déplacement automatique ;
l'acquisition (S404) d'informations de région d'un emplacement actuel de l'obstacle ;
la commande (S406), en réponse à une mauvaise correspondance entre les informations de catégorie et les informations de région, de l'appareil à déplacement automatique pour qu'il entre en contact avec l'obstacle et effectue une opération de poussée pour pousser l'obstacle dans une région correspondant aux informations de catégorie ; et
l'acquisition d'informations cartographiques, dans lequel
les informations cartographiques comprennent des informations de région sur au moins deux régions, et les informations de région sur n'importe laquelle des régions sont associées aux informations de catégorie de plus d'un type d'obstacles ;
n'importe laquelle des régions correspondant à une étiquette, et chaque étiquette correspondant à un ensemble de données antérieures, l'ensemble de données antérieures d'une même étiquette correspondant à un même type d'obstacles.

2. Procédé de commande selon la revendication 1, comprenant en outre :
l'acquisition d'une force de réaction de l'obstacle en réponse au contact avec l'obstacle ;
la commande de l'appareil à déplacement automatique pour qu'il effectue l'opération de poussée en réponse à la force de réaction inférieure à un seuil prédéterminé ; et
la commande de l'appareil à déplacement automatique pour effectuer une opération d'évitement d'obstacle en réponse à la force de réaction étant supérieure ou égale au seuil prédéterminé.

3. Procédé de commande selon la revendication 2, l'appareil à déplacement automatique comprenant un capteur de collision, et l'acquisition de la force de réaction de l'obstacle comprenant :
l'acquisition de la force de réaction détectée par le capteur de collision.

4. Procédé de commande selon la revendication 1, comprenant en outre :
l'établissement d'une correspondance entre la région et un attribut de l'obstacle en réponse à la réception de commande d'ajout d'informations d'attribut de l'obstacle par rapport à toute information de région dans les informations cartographiques.

5. Procédé de commande selon l'une quelconque des revendications 1 à 4, le trajet de déplacement comprenant un trajet de déplacement à balayage prédéterminé, et après avoir commandé l'appareil à déplacement automatique pour qu'il entre en contact avec l'obstacle et effectue l'opération de poussée pour pousser l'obstacle dans la région correspondant aux informations de catégorie, le procédé de commande comprenant en outre :
la commande de l'appareil à déplacement automatique pour qu'il retourne à l'emplacement actuel et qu'il poursuive l'opération de balayage le long du trajet de déplacement à balayage prédéterminé ; ou
la détermination qu'une opération de balayage d'une région correspondant à l'emplacement actuel est terminée ; la commande, en réponse à l'opération de balayage étant terminée, de l'appareil à déplacement automatique pour qu'il se déplace vers une région adjacente non balayée afin de redémarrer une autre opération de balayage ; et la commande, en réponse à l'opération de balayage inachevée, de l'appareil à déplacement automatique pour qu'il commence l'opération de balayage.

6. Appareil à déplacement automatique comprenant :
un module de perception, configuré pour reconnaître les informations de catégorie d'un obstacle sur un trajet de déplacement de l'appareil à déplacement automatique, et configuré en outre pour acquérir des informations de région d'un emplacement actuel de l'obstacle ; et
un module de commande, configuré pour commander, en réponse à une mauvaise correspondance entre les informations de catégorie et les informations de région, un module d'entraînement pour entraîner l'appareil à déplacement automatique à entrer en contact avec l'obstacle et à effectuer une opération de poussée pour pousser l'obstacle dans une région correspondant aux informations de catégorie ;
dans lequel
le module de perception est en outre configuré pour construire des informations cartographiques, dans lequel
les informations cartographiques comprennent des informations de région sur au moins deux régions, et les informations de région sur n'importe laquelle des régions sont associées aux informations de catégorie de plus d'un type d'obstacles ;
n'importe laquelle des régions correspondant à une étiquette, et chaque étiquette correspondant à un ensemble de données antérieures, l'ensemble de données antérieures d'une même étiquette correspondant à un même type d'obstacles.

7. Appareil à déplacement automatique selon la revendication 6, dans lequel
le module de perception est en outre configuré pour acquérir une force de réaction f de l'obstacle en réponse au contact avec l'obstacle ; et
le module de commande est en outre configuré pour commander l'appareil à déplacement automatique afin qu'il effectue l'opération de poussée en réponse à la force de réaction inférieure à un seuil prédéterminé, et pour commander l'appareil à déplacement automatique afin qu'il effectue une opération d'évitement d'obstacle en réponse à la force de réaction supérieure ou égale au seuil prédéterminé.

8. Appareil à déplacement automatique selon la revendication 7, dans lequel
le module de perception comprend un capteur de collision ; et
le module de commande est en outre configuré pour acquérir la force de réaction détectée par le capteur de collision.

9. Appareil à déplacement automatique selon la revendication 6, comprenant en outre :
un module d'interaction homme-machine, configuré pour fournir une interface permettant à un utilisateur d'ajouter des informations d'attribut de l'obstacle par rapport à n'importe quelle information de région dans les informations cartographiques.

10. Appareil à déplacement automatique selon l'une quelconque des revendications 6 à 9, le trajet de déplacement comprenant un trajet de déplacement à balayage prédéterminé, et le module de commande est en outre configuré pour :
commander le module d'entraînement pour entraîner l'appareil à déplacement automatique afin qu'il retourne à l'emplacement actuel et qu'il poursuive l'opération de balayage le long du trajet de déplacement à balayage prédéterminé ; ou
déterminer qu'une opération de balayage d'une région correspondant à l'emplacement actuel est terminée ; commander, en réponse à l'opération de balayage étant terminée, le module d'entraînement pour entraîner l'appareil à déplacement automatique à se déplacer vers une région adjacente non balayée pour redémarrer une autre opération de balayage ; et commander, en réponse à l'opération de balayage inachevée, l'appareil à déplacement automatique pour commencer l'opération de balayage.

11. Support de stockage lisible par ordinateur, configuré pour stocker un programme d'ordinateur, le programme d'ordinateur, lorsqu'il est exécuté par un processeur, étant utilisé pour mettre en œuvre le procédé de commande de l'appareil à déplacement automatique selon l'une quelconque des revendications 1 à 5.
